# FASCICULE DE BREVET EUROPEEN

(11) **EP 4 436 369 B1**
(45) Date de publication et mention de la délivrance du brevet: **29.07.2026**
(21) Numéro de dépôt: 22822494.5
(22) Date de dépôt: 28.11.2022
(51) Int. Cl.: A01K 61/17, A01K 61/59, A01K 63/00

(54) **INSTALLATION D'AQUACULTURE D'ESPECES ANIMALES**
ANLAGE ZUR AQUAKULTUR VON TIERARTEN
FACILITY FOR THE AQUACULTURE OF ANIMAL SPECIES

(30) Priorité: 28.11.2021 FR 2112802
(43) Date de publication de la demande: 02.10.2024
(73) Titulaire: Lisaqua, 44100 Nantes (FR)
(72) Inventeur: SCHOELINCK, Charlotte, 44100 NANTES (FR)
(74) Mandataire: IP Trust
(86) Numéro de dépôt international: PCT/EP2022/083428
(87) Numéro de publication internationale: WO 2023/094646

(56) Documents cités:
- WO-A1-2015/105523
- US-A- 4 250 835

## Description

### Domaine de l'invention

La présente invention concerne le domaine des systèmes de production aquacole intégrée, notamment pour la production de crevettes.

L'aquaculture multitrophique intégrée est une façon durable de produire des aliments d'origine aquatique. Cette technique consiste à inclure dans son système les bases d'un réseau trophique naturel permettant d'assurer une meilleure conservation de l'environnement tout en assurant une production alimentaire intense. Il s'agit d'une façon plus durable de cultiver des organismes aquatiques comme des poissons, des mollusques ainsi que des plantes marines dans le but de les consommer. Les organismes sont choisis afin que chacune des espèces présentes entraine au minimum un avantage pour une autre espèce recréant ainsi artificiellement un système présent dans la nature soit un réseau trophique.

### Etat de la technique

On connait dans l'état de la technique la demande de brevet WO2015105523A1 décrivant un système d'aquaponie automatisé à haut rendement qui réunit les techniques de culture classiques et l'aquaculture multitrophique intégrée hybride avec la culture aéroponique, mettant en œuvre un système de production à bioréacteur à micro-algues et à réacteur à organismes. Dans cette solution connue, on utilise des biomesures et des mesures adaptatives ainsi qu'à une analyse par imagerie thermique, pour la surveillance et la commande par automatisation robotisée) à l'aide d'un système de commande intelligent. Le système de commande assure un écosystème environnemental symbiotique piloté.

On connait aussi le brevet US4250835 concernant un système pour faire recirculer des aliments déposés au fond d'un bac à larves à travers le milieu d'élevage du bac à larves, l'appareil comprenant un premier moyen de conduit disposé dans le milieu d'élevage ayant une entrée située près du fond du bac à larves ;des seconds moyens de conduit en communication fluidique avec lesdits premiers moyens de conduit ayant une sortie de décharge située près de la surface du milieu d'élevage, et ayant une forme telle que la force de décharge depuis ladite sortie de décharge a une composante parallèle à la surface du milieu d'élevage et perpendiculaire à une ligne partant de son centre géométrique ; et des moyens de pompage pour déplacer un mélange d'aliments décantés et de milieu d'élevage depuis le fond du réservoir de larves à travers lesdits premiers moyens de conduit et lesdits seconds moyens de conduit jusqu'à la sortie de décharge desdits seconds moyens de conduit ; grâce à quoi la décharge dudit mélange depuis ladite sortie de décharge dans le milieu d'élevage confère un écoulement circulaire au milieu.

On connaît encore la demande de brevet US2014061124 qui concerne un procédé et une installation de traitement d'effluents. Le traitement comprend au moins un passage des effluents à travers un dispositif de prétraitement biologique des effluents, tels qu'un lit bactérien, une lagune ou lagunage ou d'un disque biologique, au moins une nitrification-dénitrification des effluents prétraités issues du dispositif de prétraitement biologique, à l'aide d'un filtre planté de plantes à rhizomes, par exemples de roseaux, à écoulement vertical, dont une zone inférieure est inondée et une zone supérieure est non inondée, et des moyens pour injecter des agents coagulants aptes à précipiter les phosphates de effluents, par exemple des sels de chlorure ferrique.

On connaît aussi la demande de brevet US2015144069 qui concerne un système et un procédé de production d'un produit de matériau d'amélioration du sol totalement organique qui comprend un sous-produit d'eau usée issu d'opérations de pisciculture et de la microbiologie du sol courante, préparé et délivré selon un procédé soigneusement contrôlé, qui augmente considérablement la santé et la croissance des plantes en réduisant simultanément la nécessité d'appliquer des produits chimiques synthétiques pour les nutriments, les nuisibles et les maladies.

### Inconvénients de l'art antérieur

Les solutions de l'art antérieur ne permettent pas de réaliser une installation de production aquacole totalement maîtrisée produisant un minimum de rejet et fonctionnant de manière stable et reproductible sur un site unique, à une échelle industrielle.

### Solution apportée par l'invention

Afin de remédier à ces inconvénients, la présente invention concerne selon son acception la plus générale une installation d'aquaculture présentant les caractéristiques énoncées par la revendication 1.

On entend par « installation » au sens du présent brevet un site de production unique, par exemple un bâtiment, regroupant :
- une première série d'équipements destinés à la ponte, l'éclosion, l'élevage larvaire comportant des bassins d'élevage de la première espèce animale
   et
- une série d'équipements destinés à la ponte, l'éclosion, l'élevage larvaire comportant des bassins d'élevage de la deuxième espèce animale.

L'installation peut par exemple inclure les écloseries de gambas et de vers, ou inclure seulement les équipements de grossissement de gambas et d'invertébrés, les écloseries étant installées dans un autre site séparé de l'installation et alimentant l'installation en larves de gambas et de vers.

De préférence, l'installation comporte une cuve de décantation pour le traitement des liquides desdits bassins d'élevage pour séparer :
- le surnageant riche en azote, transféré dans une cuve de biofiltre contenant des bactéries assurant la nitrification, la sortie du biofiltre comportant une vanne à trois voies :
- une première voie raccordée à un dénitrificateur dont la sortie est raccordée à ladite cuve de décantation
- une deuxième voie raccordée audit bassin d'élevage.
- Une troisième voie permettant les opérations de vidange et nettoyage
- Les boues (riches en azote) transférées dans lesdits bacs d'élevage.

Selon une variante avantageuse, l'installation comporte une cuve de recueil séquentiels et de sédimentation de fractions des liquides contenus dans lesdits bassins et bacs d'écloserie, de pré-maturation et de maturation, et de séparation de la phase liquide et de la phase solide, présentant une vanne pour l'évacuation de la phase solide, puis de transfert de la phase liquide résiduelle pour la réinjection dans lesdits bassins d'élevage et/ou lesdits bacs d'élevage.

Selon une autre variante, l'installation comporte en outre des moyens de traitement de ladite phase liquide, comprenant un filtre mécanique, un filtre biologique et un filtre UV, ainsi qu'une cuve tampon raccordée auxdits bassins d'élevage et/ou lesdits bacs d'élevage.

Description détaillée d'un exemple non limitatif de réalisation

D'autres caractéristiques et avantages ressortiront de la description qui va suivre de l'invention, description donnée à titre d'exemple uniquement, se référant aux dessins annexés sur lesquels :
[Fig.1] la [Fig.1] représente l'architecture fonctionnelle d'une installation selon l'invention
[Fig.2] La [Fig.2] est une représentation schématique du processus de traitement du surnageant de la cuve de décantation issu des bassins d'élevage.
[Fig.3] La [Fig.3] est une représentation schématique du processus de traitement du surnageant de la cuve de décantation issu des bacs d'élevage.
[Fig.4] La [Fig.4] est une représentation schématique du processus de valorisation des boues de gambas
[Fig.5] La [Fig.5] est une représentation schématique du processus de stockage et valorisation des eaux de process
[Fig.6] La [Fig.6] est une représentation du cycle de vie des gambas

### Principe général de l'invention

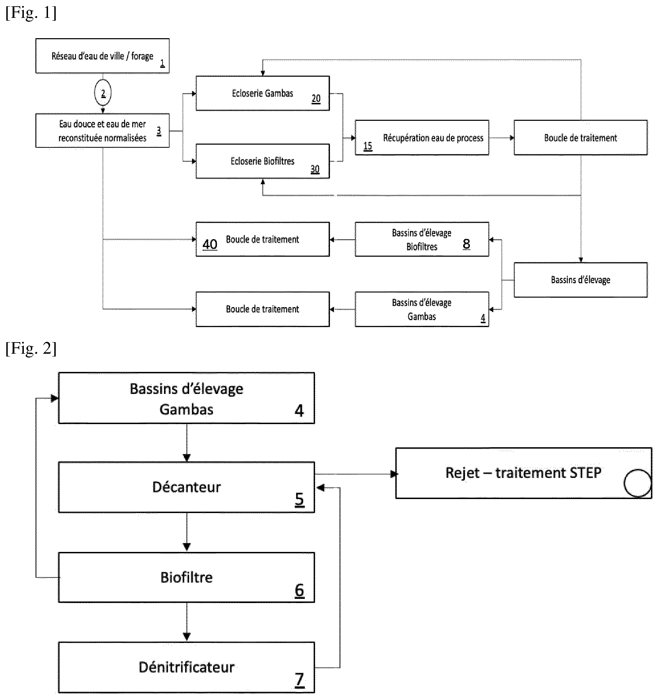

La [Fig.1] représente une vue schématique d'une installation d'élevage de gambas selon l'invention en site propre, destinée à produire des gambas en milieu artificiel recréant les conditions d'élevage dans des mangroves, en réduisant strictement les effluents, par la co-culture de plusieurs espèces consommant les déjections d'autres espèces de l'installation pour produire des matières servant de nourritures à d'autres espèces de l'écosystème fermé ainsi créé. Le but est de réduire les intrants ainsi que les effluents d'une telle installation, notamment l'eau provenant d'un réseau d'eau de ville (1) ou d'un forage.

Le principe de l'invention est basé sur la co-culture de deux espèces animales :
a. la première espèce animale marine étant
   - destinée à la consommation alimentaire humaine, notamment des crustacés ou des poissons,
   - et étant nourries, au moins à certains stades de leur cycle de reproduction et d'élevage, par des protéines issues des animaux de la deuxième espèce. Typiquement, les reproducteurs de la première espèce sont nourris avant la ponte par des animaux de la deuxième espèce, directement ou après abattage et éventuellement transformation en pâte protéinée.
a. la deuxième espèce animale étant :
   - destinée à l'alimentation de la première espèce animale co-produite, notamment des reproducteurs de la première espèce, avec éventuellement une valorisation additionnelle de l'excédent d'animaux de la deuxième espèce animale pour l'alimentation animale ou la production d'autres matière protéinées, par exemple des vers ou appâts pour la pêche
   - cette deuxième espèce animale étant de surcroît caractérisé par le fait qu'elle se nourrit de matière issus des réjections solides de ladite première espèce animale
   - cette deuxième espèce d'animaux étant notamment constituée d'animaux détritivores, en particulier vers aquatiques, et de préférence marins.

Le milieu de culture de la première espèce animale marine est constituée par de l'eau de mer, notamment reconstituée, contenant des boues d'élevage apportées par ensemencement à partir des élevages précédents, ces boues d'élevage contenant des bactéries nitrifiantes. On apporte un condensé de biofloc à ce milieu de culture. L'apport d'éléments tels que de l'urée, de l'aliment protéiné et du sucre permet le développement des colonies bactériennes. Ces colonies bactériennes vont digérer les aliments résiduels des animaux de la première espèce (déjections, aliments non consommés, ...).

Le métabolisme des animaux de la première espèce, par exemple des crevettes, conduit à la production de réjections :
- de l'urée (excrétions azotées des animaux) dégradée par les bactéries autotrophes nitrifiantes et/ou hétérotrophes et plus généralement les colonies bactériennes mixotrophes, avec un cycle de transformation par des micro-algues avec le cycle NH_{4⁺} en NO_{2⁻} puis en NO_{3⁻}
- des fèces se décomposant en matières dissoutes et en résidus particulaires solides formants des boues, réutilisables pour le réensemencement de nouveaux milieux de cultures contenant des bactéries et des micro-algues.

Les crevettes produisent ainsi :
- Des rejets dissous, potentiellement toxiques pour les crevettes, nourrissant les bactéries et micro-algues présentent dans le milieu de culture.
- Des rejets solides, aptes à nourrir les animaux de la deuxième espèce, notamment les vers.

### Elevage des reproducteurs

Les étapes d'accouplement, de frai, d'éclosion et d'élevage sont réalisées en déplaçant les reproducteurs adultes entre divers réservoirs, contenant de l'eau de mer reconstituée et des apports en aliments riches, constitués par les animaux de la seconde espèce, directement lorsqu'ils sont de taille adaptée à la consommation par les reproducteurs de la première espèce, ou sinon découpés et éventuellement transformés par exemple en pates protéinées. Les femelles, une fois gravides, sont déplacées de leur bac d'accouplement ou de couvée vers une cuve de ponte où elles déposent les œufs. Ces oeufs sont expulsés dans l'eau de mer reconstituée puis recueillis par filtration.

### Circuit d'eau

Le circuit d'eau du site est alimenté périodiquement par le réseau d'eau de ville (1) ou d'un forage pour compléter le volume d'eau circulant, avec un débit piloté par l'intermédiaire d'une servovanne (2) dont la sortie est raccordée à un système de traitement d'eau douce et salée (3) assurant une permanence des caractéristiques de l'eau douce et salée circulant dans l'installation. La servovanne (2) est commandée pour rétablir le volume d'eau et compenser les pertes par évaporation par exemple.

### Circuit d'eau

Le circuit d'eau issu du système de traitement d'eau douce et salée (3) alimente une première série d'installations comprenant une écloserie de gambas (20) et une écloserie d'invertébrés formant des biofiltres (30). L'eau de process est récupérée (15), retraitée est réintroduite dans les installations d'écloserie de gambas (20), d'écloserie d'invertébrés (30), les bassins d'élevage des gambas (4) et bacs des invertébrés (X).

L'installation comprend un premier bassin (4) pour l'élevage des gambas. Ce bassin (4) contient de l'eau salée et des flocs bactériens.

La technique floc a pour but d'optimiser la qualité des reproducteurs d'élevage tout en limitant la pression sur l'environnement par une utilisation réduite de l'eau et donc des rejets d'élevage sous forme de déchets vers l'extérieur. De plus, le floc apporte un complément alimentaire aux gambas et permet une réduction de la part alimentaire ajoutée. Le floc est constitué principalement d'éléments bactériens, notamment des bactéries nitrifiantes, et de micro-algues.

Le bassin (4) est soumis à une agitation mécanique permanente pour assurer l'aération et l'oxygénation, la remise en circulation du floc et la bonne répartition du floc dans l'ensemble du bassin. Typiquement le bassin contient environ 300 g de biomasse floculée par m³. Le bassin peut être équipé de moyens de contrôle de l'éclairage et/ou de l'ombrage pour ajuster l'énergie lumineuse en fonction des besoins de photosynthèse des micro-algues et éviter la prolifération excessive entraînant un appauvrissement en oxygène.

L'élevage de gambas génère des effluents sous forme solide ou soluble. Les rejets, sont pour l'essentiel constitués d'aliments non consommés, de fèces (part non digestible de l'aliment) et des produits d'excrétion (produits finaux de l'utilisation métabolique de la part digestible des nutriments ingérés). Le volume des rejets est significatif, de l'ordre de 150 kg de matières sèches dont 50 kg d'azote et 8 kg de phosphore pour une tonne de gambas produites.

Le bassin (20) fonctionne en eau claire ; il peut être composé de plusieurs cuves destinés à l'élevage séparé des reproducteurs, à l'éclosion et la maturation de gambas.

L'eau contenue dans le bassin (4) est traitée en continu par une boucle de traitement (40). Cette boucle de traitement (40) contient le décanteur (5), le biofiltre (6) et le dénitrificateur (7).

Comme illustré par la [Fig.2], l'eau contenu dans le bassin (4) est traitée en continue par prélèvement d'une partie du contenu qui fait l'objet d'une séparation des particules lourdes et du liquide dans un décanteur (5). Le surnageant riche en nitrite, contenant la matière azotée est transférées dans un biofiltre (6) assurant une transformation des matières azotées. L'eau riche en nitrate est traitée par un dénitrificateur (7) qui acidifie l'eau avant réinjection dans le décanteur (5).

Les boues riches en azote et phosphore sont séchées et désinfectées pour servir d'aliments pour les invertébrés contenus dans le bassin (8).

Les déchets (fecèsfèces, reste de nourriture...) sont dégradés progressivement par des micro-organismes présents dans le floc, contenant différentes bactéries aérobies métabolisant l'azote organique en azote ammoniacal (minérales) et divers métabolites azotés. L'azote ammoniacal est ensuite transformé en nitrite par les bactéries autotrophes du genre *Nitrosomonas,* notamment *Nitrosomonas europeae.* Les nitrites sont ensuite transformés en nitrates par des bactéries *Nitrobacter* dans le biofiltre (6) fixées sur un support bactérien tel que des médias de biofiltration de type curler, de la pouzzolane concassée, ou de la céramique poreuse.

On procède ensuite à une dénitrification par des bactéries telles que Pseudomonas, Flavobacterium, Alcaligenes, Achromobacter, Escherichia, Micrococcus, ... utilisant une enzyme Nitrate réductase A pour transformer les nitrates en diazote, qui est ensuite transféré dans le décanteur (5).

Les boues issues du décanteur alimentent un bassin d'alimentation d'invertébrés, par exemple des vers, qui sont élevés dans un bac (8) pour servir à la préparation d'aliments pour les gambas reproducteurs élevés dans l'écloserie (20). Si nécessaire, un ajout d'eau douce est apporté au bassin (8) d'élevage des invertébrés. Les invertébrés sont nourris en continu par les boues séchées provenant du décanteur (5).

### Traitement du surnageant du bassin d'élevage de gambas

La [Fig.2] illustre la boucle de traitement des animaux de la première espèce (gambas par exemple). Le liquide venant du bassin d'élevage de gambas (4) est transféré dans le décanteur (5) qui reçoit ces effluents pauvres en nitrate et alcalines. Le surnageant riche en nitrite et est transféré dans un biofiltre (6) alors que les eaux pauvres en minéraux sont rejetées pour être traitées par une station d'épuration des eaux usées.

### Traitement du surnageant des bacs d'élevage biofiltres

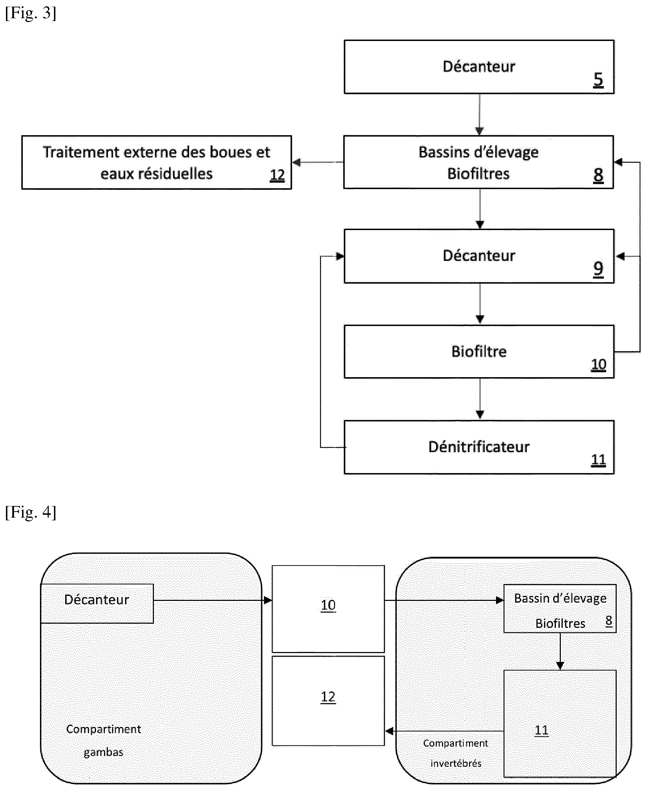

La [Fig.3] illustre la boucle de traitement des invertébrés. Le liquide venant du bac d'élevage biofiltres (8) est transféré dans le décanteur (9) qui reçoit ces effluents pauvres en nitrate et alcalines. Le surnageant riche en nitrite et est transféré dans un biofiltre (10) alors que les eaux pauvres en minéraux sont rejetées pour être traitées par une station d'épuration des eaux usées (12).

### Valorisation des boues de gambas

La [Fig.4] illustre le processus de valorisation des boues de gambas issues du décanteur (5). Ces boues contiennent 90% d'eau et des matières solides riches en azote et phosphore particulaires. Elles sont soumises à une étape de séchage et de désinfection pour produire une matière sèche, contenant environ 30% d'humidité résiduelle riche en azote et phosphore particulaires, constituant la base nutritive des invertébrés dans le bassin d'élevage (8). On procède périodiquement à la récupération des boues d'invertébrés et les eaux résiduelles pauvres en azote et phosphore particulaires dans le bassin d'élevage (8), avant de procéder à l'extraction et traitement externe des boues.

### Stockage et valorisation des eaux de process

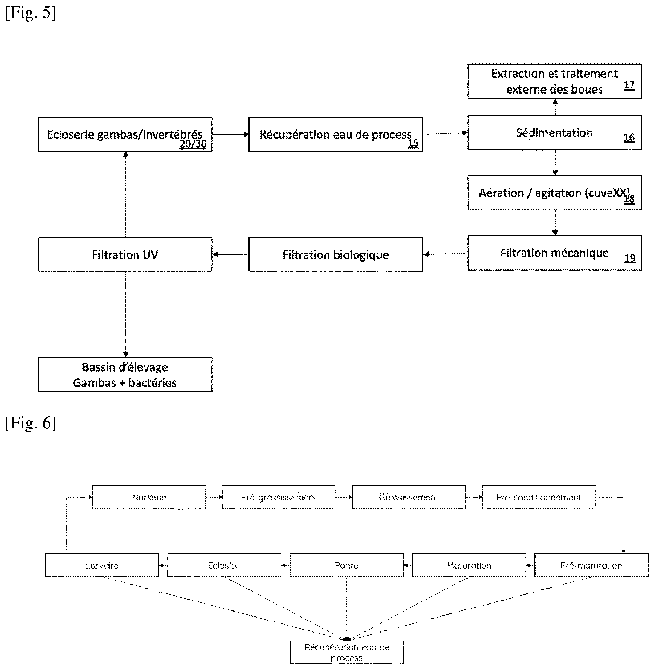

La [Fig.5] illustre le processus de stockage et valorisation des eaux de process provenant d'une écloserie de gambas (20) et d'une écloserie d'invertébrés (30) d'autre part. L'eau en provenance des deux cuves est récupérée par un conduit (15) débouchant dans un bassin de sédimentation (16). Ce surnageant débouche sur une cuve soumise à une agitation (18), et les boues sont traitées dans une station (17). Les eaux résiduelles font l'objet d'une première filtration mécanique, d'un traitement biologique dans un biofiltre (21) suivi d'un traitement par rayonnements ultraviolet dans un poste (19)) pour alimenter ensuite le bassin d'élevage de gambas (4), d'invertébrés (8), l'écloserie de gambas et l'écloserie d'invertébrés.

### Croissance des gambas

La [Fig.6] illustre le cycle de production des gambas, qui peut se dérouler par passage dans une succession de bassins alimentés par l'eau du site.

Le cycle comprend une étape de nurserie, de pré-grossissement, de grossissement (50), de préconditionnement (51), de prématuration (52), de maturation (53), de ponte (54), d'éclosion (55) et de croissance des larves (56) qui sont ensuite mise en phase de nurserie (50).

Les eaux des différentes cuves sont récupérées pour faire l'objet d'un traitement de sédimentation, d'extraction et de traitement des boues, de filtration comme décrit précédemment.

### Bassins d'élevage des animaux de la première espèce

Les bassins d'élevage de la première espèce, notamment de crevettes, sont avantageusement divisés en trois bassins correspondant à des stades de maturité croissants.

Chaque bassin comporte optionnellement un capteur pour la mesure de la turbidité, un capteur de température.

Le premier bassin constitue la nurserie. Il présente un volume inférieur aux autres bassins. Il comporte un piquage dans sa partie inférieure pour le transfert gravitaire vers le bassin suivant, disposé à un niveau inférieur. Le bassin peut comporter un capteur hydroacoustique et/ou optique pour le comptage du nombre de crevettes. Le piquage comporte optionnellement un système optique pour le comptage du nombre de crevettes transférées.

Les deux bassins suivants comportent un système d'alimentation automatique, par exemple une trémie de déversement de granules protéinées.

Optionnellement ils comportent des filets mobiles empêchant les crevettes de franchir le bord du bassin, ces filets pouvant être relevés pour faciliter l'accès au bassin, notamment pour les prélèvements d'animaux.

Une vanne de transfert est prévue entre le bassin de pré-grossissement et le bassin de grossissement, pour le transfert gravitaire entre les deux bassins.

### Bassins d'élevage des animaux de la deuxième espèce

L'élevage des animaux de la deuxième espèce présente plusieurs étapes : la maturation des reproducteurs, la ponte, l'éclosion, l'élevage larvaire. Les larves sont ensuite envoyées sur des sites de production pouvant être installés sur d'autres sites.

## Revendications

1. - Installation d'aquaculture d'une première espèce animale consommant des protéines et produisant des rejets contenant de l'urée et des boues azotées, comportant :
• Une écloserie (20) comportant au moins un bassin de ponte en eau claire, au moins un bassin d'éclosion en eau claire, et au moins un bassin larvaire en eau claire
• Au moins un bassin de pré-maturation et de maturation en eau claire, avec des moyens d'apport d'aliments protéinés
• Au moins un bassin d'élevage de ladite première espèce animale contenant de l'eau et du biofloc contenant des bactéries assurant la nitrification desdits rejets
**caractérisée en ce que** ladite installation comporte en outre :
• Au moins un autre bassin d'élevage (6) d'une deuxième espèce animale, ladite deuxième espèce ayant une activité de biofiltres de produits azotés,
• des moyens de transfert des boues azotée accumulées dans lesdits premiers bassins d'élevage dans lesdits autres bassins d'élevage
• des moyens pour transformer les espèces de la deuxième espèce en protéines d'alimentation, et de transfert dans lesdits bassins de pré-maturation et de maturation.

2. - Installation d'aquaculture selon la revendication 1 **caractérisée en ce qu'**elle comporte une cuve de décantation pour le traitement des liquides desdits bassins d'élevage pour séparer :
• le surnageant, transféré dans une cuve de biofiltre contenant des bactéries assurant la nitrification, la sortie du biofiltre comportant une vanne à trois voies :
• une première voie raccordée à un dénitrificateur dont la sortie est raccordée à ladite cuve de décantation
• une deuxième voie raccordée audit bassin d'élevage.
• une troisième voie permettant les opérations de vidange et nettoyage les boues étant transférées dans des bacs d'élevage.

3. - Installation d'aquaculture selon la revendication 1 **caractérisée en ce qu'**elle comporte une cuve de recueil séquentiels et de sédimentation de fractions des liquides contenus dans lesdits bassins de d'écloserie, de pré-maturation et de maturation, et d'élevage, et de séparation de la phase liquide et de la phase solide, présentant une vanne pour l'évacuation de la phase solide, puis de transfert de la phase liquide résiduelle pour la réinjection dans lesdits bassins d'élevage et/ou lesdits bacs d'élevage.

4. - Installation d'aquaculture selon la revendication précédente **caractérisée en ce qu'**elle comporte en outre des moyens de traitement de ladite phase liquide, comprenant un filtre mécanique, un filtre UV et un filtre biologique, ainsi qu'une cuve tampon raccordée auxdits bassins d'élevage et/ou lesdits bacs d'élevage.

## Patentansprüche

1. Aquakulturanlage für eine erste Tierart, die Proteine verbraucht und Abfälle, die Harnstoff und Stickstoffschlamm enthalten, erzeugt, die Folgendes aufweist:
• eine Brutanlage (20), die mindestens ein Laichbecken mit klarem Wasser, mindestens ein Schlupfbecken mit klarem Wasser und mindestens ein Larvenbecken mit klarem Wasser aufweist
• mindestens ein Vorreife- und Reifebecken mit klarem Wasser mit Proteinfutterzufuhrmitteln
• mindestens ein Aufzuchtbecken für die erste Tierart, das Wasser und Bioflocs enthält, die Bakterien enthalten, die für die Nitrifizierung der Abfälle sorgen,
**dadurch gekennzeichnet, dass** die Anlage weiter Folgendes aufweist:
• mindestens ein weiteres Aufzuchtbecken (6) für eine zweite Tierart, wobei die zweite Art eine Aktivität als Biofilter für Stickstoffprodukte aufweist,
• Mittel für den Transfer des in den ersten Aufzuchtbecken angesammelten Stickstoffschlamms in die anderen Aufzuchtbecken
• Mittel zur Umwandlung der Arten der zweiten Art in Futterproteine und zum Transfer in die Vorreife- und Reifebecken.

2. Aquakulturanlage nach Anspruch 1, **dadurch gekennzeichnet, dass** sie einen Absetztank zur Aufbereitung der Flüssigkeiten der Aufzuchtbecken zur Trennung von Folgendem aufweist:
• den Überstand, der in einen Biofiltertank mit Bakterien geleitet wird, die die Nitrifizierung gewährleisten, wobei der Ausgang des Biofilters ein Dreiwegeventil aufweist:
• eine erste Leitung, die mit einem Stickstoffentferner verbunden ist, deren Ausgang mit dem Absetztank verbunden ist
• eine zweite Leitung, die mit dem Aufzuchtbecken verbunden ist.
• eine dritte Leitung, die die Entleerung und Reinigung ermöglicht, wobei der Schlamm in Aufzuchtbehälter umgeleitet wird.

3. Aquakulturanlage nach Anspruch 1, **dadurch gekennzeichnet, dass** sie einen Tank zum sequentiellen Sammeln und Sedimentieren von Fraktionen der in den Laich-, Vorreife- und Reife- sowie Aufzuchtbecken enthaltenen Flüssigkeiten und zum Trennen der flüssigen und festen Phase aufweist, aufweisend ein Ventil zum Ablassen der festen Phase und anschließenden Transfer der restlichen flüssigen Phase zur Wiedereinspritzung in die Aufzuchtbecken und/oder die Aufzuchtbehälter.

4. Aquakulturanlage nach dem vorhergehenden Anspruch, **dadurch gekennzeichnet, dass** sie weiter Mittel zur Aufbereitung der flüssigen Phase aufweist, die einen mechanischen Filter, einen UV-Filter und einen biologischen Filter sowie einen Puffertank umfasst, der mit den Aufzuchtbecken und/oder den Aufzuchtbehältern verbunden ist.

## Claims

1. A facility for the aquaculture of a first animal species consuming proteins and producing waste containing urea and nitrogen sludge, comprising:
• a hatchery (20) comprising at least one clear water spawning pond, at least one clear water hatching pond, and at least one clear water larval pond
• at least one clear water pre-maturation and maturation pond with protein food supply means
• at least one rearing pond for said first animal species containing water and biofloc containing bacteria ensuring nitrification of said waste,
**characterised in that** said facility further comprises:
• at least one other rearing pond (6) for a second animal species, said second species having a nitrogen product biofilter activity
• means for transferring the nitrogen sludge accumulated in said first rearing ponds into said other rearing ponds
• means for transforming the species of the second species into feed proteins, and transferring them into said pre-maturation and maturation ponds.

2. The aquaculture facility according to claim 1, **characterised in that** it comprises a settling vessel for the treatment of liquids of said rearing ponds to separate:
• the supernatant, transferred into a biofilter vessel containing bacteria ensuring nitrification, the outlet of the biofilter comprising a three-way valve:
• a first way connected to a denitrifier whose outlet is connected to said settling vessel
• a second way connected to said rearing pond
• a third way allowing emptying and cleaning operations, the sludge being transferred into rearing tanks.

3. The aquaculture facility according to claim 1, **characterised in that** it comprises a vessel for sequentially collecting and settling fractions of liquids contained in said hatchery, pre-maturation and maturation, and rearing ponds, and for separating the liquid phase from the solid phase, having a valve for discharging the solid phase, and then transferring the residual liquid phase for reinjection into said rearing ponds and/or said rearing tanks.

4. The aquaculture facility according to the preceding claim, **characterised in that** it further comprises means for treating said liquid phase, comprising a mechanical filter, a UV filter and a biological filter, as well as a buffer vessel connected to said rearing ponds and/or rearing tanks.
